# EUROPEAN PATENT APPLICATION

(11) **EP 4 068 192 A1**
(43) Date of publication of application: **05.10.2022**
(21) Application number: 22164886.8
(22) Date of filing: 29.03.2022
(51) Int. Cl.: G06Q 50/06

(54) **PHYSICAL POWER DOLLAR TRADING SYSTEM AND METHOD THEREOF**

(30) Priority: 31.03.2021 TW 110111951
(71) Applicant: Yao, Li-Ho, 106 Taipei City (TW)
(72) Inventor: Yao, Li-Ho, 106 Taipei City (TW)
(74) Representative: Horak, Michael

(57) **Abstract**

Trading with power dollar in combination with portable electricity is provided. A system includes a trading management host (10) of an electricity bank platform, a trading point device (20) of at least one dealer, and a portable energy storage device (30) of at least one entity member. Connection established among the trading management host (10), the trading point device (20), and the portable energy storage device (30) allows for trading data to be transmitted therebetween, so that an entity member may conduct trading by using the portable energy storage device (30) and the trading point device (20) to purchase or sell electricity or to convert electricity into usable power dollar in a digital form for trading with other merchandise products, to thereby vitalize the green energy industry, allowing for effective utilization of green energy by all people to thus create sharing economic of the electricity market.

## Description

### TECHNICAL FIELD OF THE INVENTION

The present invention relates generally to power dollar trading implemented in combination with portable electricity, and more particularly to a physical power dollar trading system and a method thereof.

### DESCRIPTION OF THE PRIOR ART

The recent progresses in technology and science make the efficiency and stability of acquisition of green energy greatly enhanced, and the shortcomings of high cost and instability in the past have been overcome. The interests of homes and industries for using the green energy are increased. However, the green energy industry is generally monopolized by large enterprises and the regular homes and small businesses (which will be collectively referred to as "small entities" hereinafter) can only be end users of the green energy and are generally incapable of engaging in the green energy industry. Consequently, when a small entity builds up green energy production facility, except consumption by their own, there is generally no way to do trading with extra electricity or to sell back to the green energy industry. This lowers the attempt for people to widely build up green energy production facility. In other words, being constrained by the previously discussed issue of electricity trading, the green energy industry cannot be popularized to small entities and the issue of greenhouse gas reduction cannot be truly resolved, and consequently, the green energy industry cannot be effectively built up and prospered.

### SUMMARY OF THE INVENTION

The primary objective of the present invention is to enable trading conducted with electricity among small entities to thereby vitalize the green energy industry and enable effective use of green energy by all people and also to create sharing economic for the electricity market.

Another objective of the present invention is to lower down investment cost and risk and loss in order to encourage regular homes or small businesses to devote themselves to the electricity industry to thereby resolve the issue of energy shortage and to further revitalize the economics.

### BRIEF DESCRIPTION OF THE DRAWINGS

FIG. 1 is a schematic view showing architecture of a system according to the present invention.
FIG. 2 is a schematic view showing a configuration of the system according to the present invention.

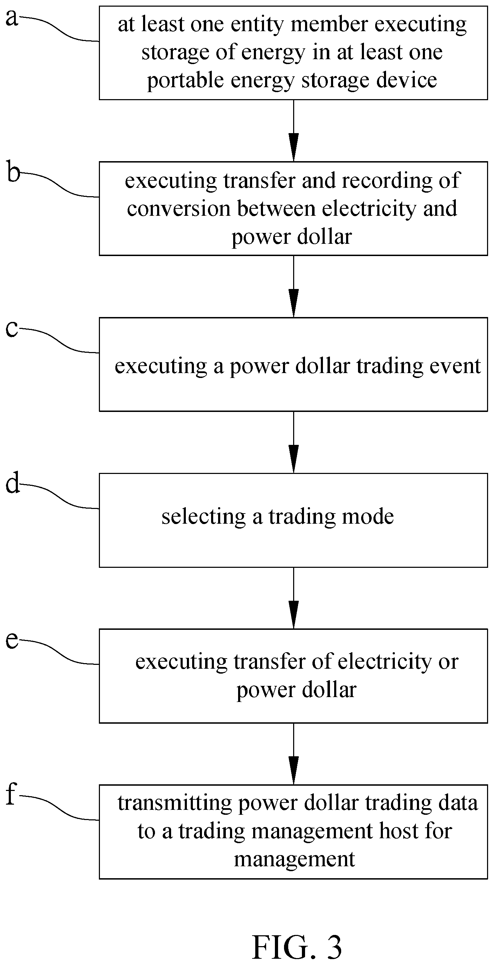

FIG. 3 is a flow chart illustrating a method according to the present invention.

### DETAILED DESCRIPTION OF THE PREFERRED EMBODIMENT

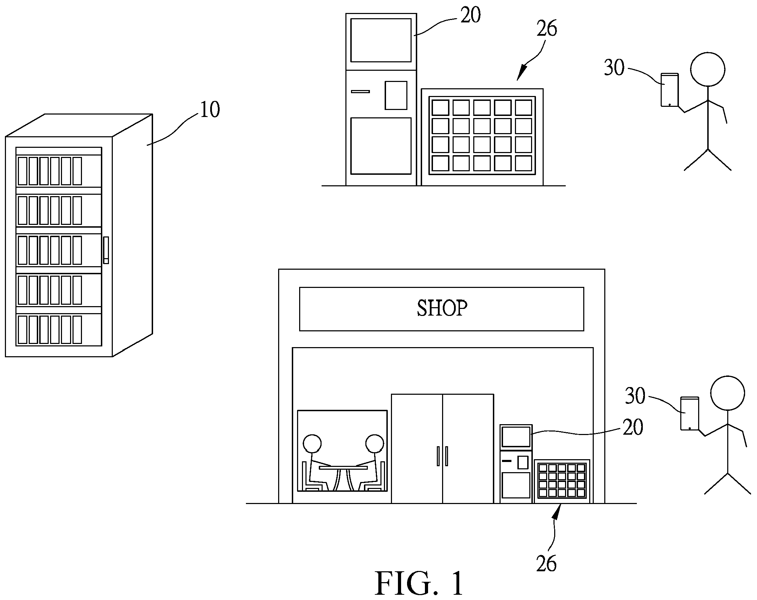

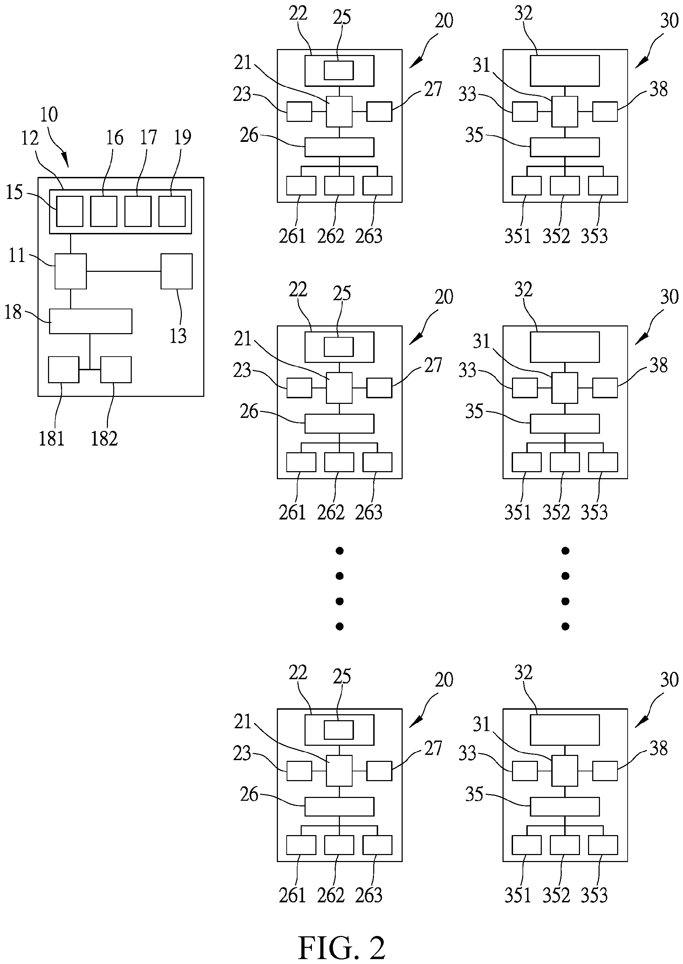

As shown in FIGS. 1 and 2, according to the present invention, a system comprises a trading management host 10 of at least one electricity bank platform, a trading point device 20 of at least one dealer, and a portable energy storage device 30 of at least one entity member. Data are transmittable among the trading management host 10, each trading point device 20, and each portable energy storage device 30 by means of wired or wireless connections, so that the entity member utilizes electricity to interact with the dealer to fulfill at least one power dollar trading event, and the electricity bank platform performs recording, statistical analysis, and management of the power dollar trading event.

A detailed structure of the trading system according to the present invention is depicted in FIGS. 1 and 2. The trading management host 10 at least comprises a processing unit 11, a memory unit 12, a transmission unit 13, a trading event management module 15, an entity member management module 16, a dealer management module 17, and a power dollar management module 19, wherein the processing unit 11 functions to execute a built-in program and process all sorts of data. The memory unit 12 is connected with the processing unit 11 and functions to store programs and all sorts of data. Further, the transmission unit 13 is connected with the processing unit 11 and is connectable with the trading point device 20 by means of wireless technology or wired technology to enable connection with the trading point device 20 of the at least one dealer to receive and transmit all sorts of trading data. Further, the trading event management module 15 can be a program built in the memory unit 12 and is connectable with the trading point device 20 and the portable energy storage device 30 to execute and generate a power dollar trading event. Each power dollar trading event may include, but not limited to, conversion between electricity and power dollar, trading object, trading fee, payment transfer of power dollar, and recording of power dollar. The entity member management module 16 is storable in the memory unit 12 and is operable through online connection with the trading event management module 15. Further, the entity member management module 16 functions to create and verify entity-member data, store management data of devices and power dollar under an entity-member account, inquire the entity-member data, such as use record, trading record, and remaining amount of power dollar. Further, the dealer management module 17 is storable in the memory unit 12 and is operable through online connection with the trading event management module 15. Further, the dealer management module 17 functions to create and verify dealer data, store management data of devices under each dealer account, inquire the dealer data, such as use record and trading record. Further, the power dollar management module 19 is in connection with the processing unit 11 to conduct operations including, but not limited to, conversion, management, redemption, giving, transfer, or sharing of power dollar, wherein the power dollar is valuable property, such as digital points, virtual currency, and carbon credit, which is considered equivalent, in value, to cash. According to some embodiments, the trading management host 10 further comprises an electricity management unit 18 connected with the processing unit 11, and the electricity management unit 18 is set in connection with at least one electricity connection port 181 and at least one energy storage installation 182, wherein the electricity management unit 18 functions to manage and control input and output of electricity through each electricity connection port 181 into and from each energy storage installation 182 and conversion between electricity and power dollar. The electricity connection port 181 is connectable with an external electricity supply source, such as a power grid. The energy storage installation 182 functions to store electricity and can be for example a supper-sized storage battery.

The trading point device 20 is a piece of equipment installed in the dealer. The trading point device 20 at least comprises a processing unit 21, a memory unit 22, a transmission unit 23, a trading module 25, an electricity exchange unit 26, and a near-field sensing unit 27, wherein the processing unit 21 functions to execute a built-in program and process all sorts of data. The memory unit 22 is connected with the processing unit 21, and the memory unit 22 functions to store programs and all sorts of data. Further, the transmission unit 23 is connected with the processing unit 21 and is connectable with the trading management host 10 by means of wireless technology or wired technology to enable connection for receiving and transmitting all sorts of data. Further, the trading module 25 can be a program built in the memory unit 22 and has a function of selecting a trading mode. Further, the electricity exchange unit 26 is connected with the processing unit 21 and functions to conduct electricity transfer with respect to the portable energy storage device 30. The electricity exchange unit 26 may comprise an electricity management unit 261 and at least one electricity connection port 262 and at least one energy storage installation 263 that are connected with the electricity management unit 261, wherein the electricity management unit 261 functions to manage and control input or output of electricity through each electricity connection port 262 into or from each energy storage installation 263, and the electricity exchange unit 26 is operable to do calculation and conversion between electricity and power dollar. The near-field sensing unit 27 can be a sensing element based on near field communication (NFC) or Bluetooth and is operable to conduct transfer of power dollar with respect to the portable energy storage device 30 to generate a power dollar trading event.

The portable energy storage device 30 at least comprises a processing unit 31, a memory unit 32, a near-field sensing unit 33, and an electricity energy storage unit 35, wherein the processing unit 31 functions to execute a built-in program and process all sorts of data. The memory unit 32 is connected with the processing unit 31 and functions to store programs, electricity amount, power dollar, and all sorts of data. Further, the near-field sensing unit 33 is connected with the processing unit 31 and can be a sensing element based on NFC or Bluetooth for with the near-field sensing unit 27 of the trading point device 20 for receiving and transmitting all sorts of trading data. Further, the electricity energy storage unit 35 is connectable with the processing unit 31, and the electricity energy storage unit 35 is operable to conduct electricity transfer with respect to the electricity exchange unit 26 of the trading point device 20. The electricity energy storage unit 35 may comprise an electricity management unit 351 and an electricity connection port 352 and an energy storage unit 353 that are connected with the electricity management unit 351, wherein the electricity management unit 351 functions to manage and control input or output of electricity through each electricity connection port 352 into or from each energy storage unit 353, and the electricity energy storage unit 35 is operable to do calculation and conversion between electricity and power dollar, including capacity power dollar obtained through conversion of electricity remaining in the energy storage unit 353, and stores data related to the capacity power dollar and usable power dollar accumulated through uses in the memory unit 32. Further, according to some embodiments, the portable energy storage device 30 may further comprise a the transmission unit 38 connected with the processing unit 31, and the transmission unit 38 is connectable with the trading management host 10 by means of wireless technology or wired technology to enable connection for receiving and transmitting all sorts of trading data, so that each portable energy storage device 30 is allowed to conduct trading with another portable energy storage device 30.

As such, a system that is capable of conducting physical power dollar trading in combination with electricity is provided.

To use the present invention, as shown in FIGS. 1 and 2, the trading management host 10 of the electricity bank platform may generate a power dollar trading event for the portable energy storage device 30 of at least one entity member conducting trading with the trading point device 20 of at least one dealer by using electricity or power dollar, and carry out effective recording, storage, statistical analysis, and management of data of the power dollar trading events. Practical applications of the present invention can be better understood through the following illustrative examples:
Illustrative example 1 illustrates energy storage and trading mode of portable energy storage device 30.

An entity member uses the portable energy storage device 30 owned thereby to proceed with registration and verification of membership data and device in the trading management host 10 of the electricity bank platform, so that the entity member may utilize power generation facility, such as solar cells and wind power generator, to generate electricity and feeds and stores such electricity in the energy storage unit 353 by means of the electricity energy storage unit 35 of the portable energy storage device 30, and uses the electricity management unit 351 to record and convert the capacity of the stored electricity into capacity power dollar. For example, in case that 1000mAh (milliampere-hour) is converted into 1 power dollar (PD), for the energy storage unit 353 having a capacity of 100000 mAh, the maximum capacity power dollar is 100PD, and in case that a remaining capacity of the energy storage unit 353, after a use, is 65000 mAh, the tradable capacity power dollar thereof is 65PD, which is stored in the memory unit 32 of the portable energy storage device 30. Further, the memory unit 32 of the portable energy storage device 30 can also store usable power dollar that remains with the entity member after multiple times of trading. For example, when the entity member sells, for 12 times, the full capacity of electricity of the energy storage unit 353, the usable power dollar would be accumulated to 1200PD. In this way, electricity trading conducted by the entity member is implemented through addition and subtraction of capacity power dollar, and alternatively and additionally, the entity member is allowed to use usable power dollar to directly do trading.

Illustrative example 2 illustrates electricity exchange and trading mode of trading point device 20.

A dealer may be a shop, such as a battery exchange station and a convenient store, which is capable of exchange and/or sale of electricity. The dealer installs at least one trading point device 20, and the dealer conducts registration and verification of membership data and devices toward the trading management host 10 of the electricity bank platform for all the trading point devices 20, and establishes connection of the trading point device 20 with the trading management host 10 of the electricity bank platform. Further, the trading point device 20 uses the electricity connection port 262 of the electricity exchange unit 26 to establish connection with the electricity connection port 352 of the portable energy storage device 30 of an entity member for exchange of electricity, and trading is performed with capacity power dollar or usable power dollar of the entity member by means of the near-field sensing units 27, 33 of both parties. Further, through connection established between the trading point device 20 and the trading management host 10, trading data is transmitted to the trading management host 10 to generate a power dollar trading event and is recorded and stored in the trading management host 10.

Illustrative example 3 illustrates mode of trading conducted with electricity between portable energy storage device 30 and trading point device 20.

An entity member uses the portable energy storage device 30 owned thereby to sell or purchase electricity with the trading point device 20 of a dealer. Taking selling electricity as an example, the entity member utilizes power generation facility, such as solar cells and wind power generator, to generate electricity or conducts charging through a traditional electrical grid, and stores such electricity in the energy storage unit 353 of the electricity energy storage unit 35 of the portable energy storage device 30, and uses the electricity management unit 351 of the electricity energy storage unit 35 to convert the capacity of the stored electricity into capacity power dollar. For example, in case that the storage capacity in the energy storage unit 353 is 100000 mAh, and the capacity power dollar is 100PD, the entity member may select to sell 80000 mAh through connecting the electricity connection port 352 of the portable energy storage device 30 to the electricity connection port 262 of the electricity exchange unit 26 of the trading point device 20, and also placing the portable energy storage device 30 on the trading point device 20 to allow the near-field sensing units 33, 27 of the two to sense each other, and may use the trading module 25 of the trading point device 20 to select electricity sale and a sale amount (such as capacity power dollar of 80PD), and at such a moment, the portable energy storage device 30 uses the electricity energy storage unit 35 to transfer 80000 mAh to the energy storage installation 263 of the electricity exchange unit 26 of the trading point device 20, and at the same time, the trading point device 20 adds 80PD into usable power dollar in the memory unit 32 of the portable energy storage device 30, and at this moment, the memory unit 32 of the portable energy storage device 30 makes recording that a remaining amount of capacity power dollar is 20PD (with a remaining amount of electricity capacity being 20000 mAh), and usable power dollar is 80PD, and, as such, a power dollar trading event is generated, and the trading point device 20 transmits the power dollar trading event to the trading event management module 15 of the trading management host 10 to perform data storage and management.
Purchasing electricity is now taken as another example, in which the entity member, for a need for electricity, brings the portable energy storage device 30 owned thereby to a dealer and uses the trading point device 20 to conduct purchase of the required electricity. The entity member connects the electricity connection port 352 of the portable energy storage device 30 to the electricity connection port 262 of the electricity exchange unit 26 of the trading point device 20, and also places the portable energy storage device 30 on the trading point device 20 to allow the near-field sensing units 33, 27 of the two to sense each other, and then, uses the trading module 25 of the trading point device 20 to select electricity purchase and a desired amount (such as capacity power dollar of 75PD), and at this moment, the energy storage installation 263 of the trading point device 20 transfers electricity of a capacity of 75000 into the energy storage unit 353 of the portable energy storage device 30, and at the same time, the trading point device 20 deducts75PD of usable power dollar from the memory unit 32 of the portable energy storage device 30. For example, the portable energy storage device 30 originally has usable power dollar of 250PD, and then, only 175PD is left. At the same time, the memory unit 32 of the portable energy storage device 30 makes recording that the capacity power dollar kept therein increases by 75PD (namely the remaining capacity of electricity is increased by 75000 mAh, such as 5000 mAh being increased to 80000 mAh), and a power dollar trading event is thus generated, and the trading point device 20 transmits the power dollar trading event to the trading event management module 15 of the trading management host 10 for data storage and management.

Illustrative example 4 illustrates mode of trading conducted with power dollar between portable energy storage device 30 and trading point device 20.

An entity member uses the portable energy storage device 30 owned thereby to do trading for other merchandise products with the trading point device 20 of a dealer by directly using usable power dollar accumulated therein. For example, the portable energy storage device 30 of the entity member records therein usable power dollar of 650PD, which can be directly used by the entity member to purchase a desired merchandise product from the dealer, such as purchasing one cup of coffee using 50PD, and in this case, the entity member places the portable energy storage device 30 directly on the trading point device 20 to allow the near-field sensing units 33, 27 of the two to sense each other, and uses the trading module 25 of the trading point device 20 to select usable power dollar trading, and the trading point device 20 directly deduct 50PD of usable power dollar from the portable energy storage device 30, making the memory unit 32 of the portable energy storage device 30 recording an amount of usable power dollar remaining therein is 600PD, and a power dollar trading event is generated, and the trading point device 20 transmits the power dollar trading event to the trading event management module 15 of the trading management host 10 for data storage and management.

Illustrative example 5 illustrates mode of trading with electricity between one portable energy storage device 30 and another portable energy storage device 30.

An entity member may sell or purchase electricity toward or from another entity member. At least one of the portable energy storage devices 30 owned by the two entity members includes the transmission unit 38 for connection with the trading management host 10 of the electricity bank. Taking selling electricity as an example, the one of the portable energy storage devices 30 that includes the transmission unit 38 is defined as a first portable energy storage device 30, while the other one of the portable energy storage devices 30 is defined as a second portable energy storage device 30. Next, the first and second portable energy storage devices 30 are connected by means of the electricity connection ports 352, and the near-field sensing units 33 of the first and second portable energy storage devices 30 sense each other. The electricity energy storage unit 35 of the first portable energy storage device 30 is used to select electricity sale and a sale amount (such as capacity power dollar of 60PD), and at such a moment, the first portable energy storage device 30 uses the electricity energy storage unit 35 to transfer 60000 mAh to the energy storage unit 353 of the electricity energy storage unit 35 of the second portable energy storage device 30, and at the same time, the first portable energy storage device 30 deducts usable power dollar of 60PD from the second portable energy storage device 30, and the first portable energy storage device 30 increases usable power dollar by 60PD, so that the memory unit 32 of the first portable energy storage device 30 makes recording that the amount of capacity power dollar remaining therein is deducted by 60PD (namely a remaining capacity of electricity is reduced by 60000 mAh), while the usable power dollar is increased by 60PD, and the memory unit 32 of the second portable energy storage device 30 makes recording that an amount of capacity power dollar remaining therein is increased by 60PD (namely a remaining capacity of electricity is increased by 60000 mAh), while the usable power dollar is deducted by 60PD, and a power dollar trading event is thus generated, and the first portable energy storage device 30 transmits the power dollar trading event to the trading event management module 15 of the trading management host 10 for data storage and management.

A flow of a trading method according to the present invention comprises the following steps:
(a) at least one entity member executing storage of energy in at least one portable energy storage device: in which at least one entity member uses a portable energy storage device 30 owned thereby to store energy, so that an energy storage unit 353 of an electricity energy storage unit 35 of the portable energy storage device 30 owned thereby stores therein electricity;
(b) executing transfer and recording of conversion between electricity and power dollar: in which the electricity energy storage unit 35 of the portable energy storage device 30 owned by the at least one entity member uses an electricity management unit 351 to convert a capacity of electricity of the energy storage unit 353 into capacity power dollar, and makes a memory unit 32 of the portable energy storage device 30 recording data of a corresponding remaining amount of capacity power dollar and usable power dollar;
(c) executing a power dollar trading event: in which the at least one entity member uses the portable energy storage device 30 thereof to conduct a power dollar trading event toward a trading point device 20 of at least one dealer or a portable energy storage device 30 of another entity member;
(d) selecting a trading mode: in which the trading point device 20 is set in connection with a trading management host 10, and selection of a trading mode is conducted according to a need of the power dollar trading event, such as selling electricity, purchasing electricity, and applying usable power dollar to purchase a merchandise product;
(e) executing transfer of electricity or power dollar: in which according to the trading mode selected for the power dollar trading event, transfer of electricity or power dollar is carried out between the portable energy storage device 30 and the trading point device 20 or another portable energy storage device 30; and
(f) transmitting power dollar trading data to a trading management host for management: in which recordings in respect of trading object, trading fee, payment and transfer of power dollar, and amount of power dollar of the power dollar trading event is transmitted back to the trading management host 10 in order to allow an electricity bank platform to do management, recording, and inquiry of the dealer and the entity member thereafter to thereby completing the trading.

It is appreciated from the above that the present invention allows trading to be performed with electricity between entity members, and may vitalize the green energy industry, enabling effective utilization of the green energy by all people, and creating sharing economic of the electricity market to lower down the investment cost and risk and loss, so as to encourage regular homes and small business to engage in the electricity industry to thereby resolve the issue of energy shortage and to further prosper the economic.

## Claims

1. A physical power dollar trading system, for conducting at least one power dollar trading event among an electricity bank platform, at least one dealer, and at least one entity member, the power dollar trading event including electricity exchange and power dollar trading, the system comprising:
a trading management host (10) of the electricity bank platform, which is operable to execute a trading event management module (15) to manage the power dollar trading event;
a trading point device (20) of the at least one dealer, which is connectable with the trading management host (10) for transmission of data, the trading point device (20) being operable to execute a trading module (25), the trading point device (20) allowing the at least one entity member to conduct the electricity exchange of and the power dollar trading; and
a portable energy storage device (30) of the at least one entity member, which is operable for near-field sensing with the trading point device (20) for transmission of data, the portable energy storage device (30) being operable to store electricity and to carry out calculation and conversion between electricity and power dollar so as to convert a left amount of electricity into a capacity power dollar, the capacity power dollar being accumulated into a usable power dollar through addition or subtraction after a use
wherein the entity member uses the portable energy storage device (30) to conduct electricity exchange and trading with the trading point device (20) of the dealer by using the capacity power dollar or the usable power dollar to generate a corresponding power dollar trading event, and the trading management host (10) of the electricity bank platform is operable to do management of the power dollar trading event.

2. The physical power dollar trading system according to claim 1, wherein the trading management host (10) at least comprises a processing unit (11), a memory unit (12), a transmission unit (13), an entity member management module (16), a dealer management module (17), and a power dollar management module (19), wherein the processing unit (11) executes a built-in program and processes all sorts of data; the memory unit (12) is connected with the processing unit (11) and stores programs and all sorts of data; the transmission unit (13) is connected with the processing unit (11) and is connectable with the trading point device (20); the trading event management module (15) comprises a program built in the memory unit; the entity member management module (16) is stored in the memory unit (12) and is operable through connection with the trading event management module (15); the dealer management module (17) is stored in the memory unit (12) and is operable through connection with the trading event management module (15); and the power dollar management module (19) is connected with the processing unit (11) to carry out operations of conversion, management, redemption, giving, transfer, or sharing of electricity and power dollar.

3. The physical power dollar trading system according to claim 2, wherein the trading management host (10) further comprises an electricity management unit (18) connected with the processing unit (11); the electricity management unit (18) is in connection with at least one electricity connection port (181) and at least one energy storage installation (182), wherein the electricity management unit (18) manages and controls input and output of electricity through each electricity connection port (181) into and from each energy storage installation (182) and conversion between electricity and power dollar; the electricity connection port (181) is connectable with an external electricity supply source; and the energy storage installation (182) stores electricity.

4. The physical power dollar trading system according to claim 1, wherein the trading point device (20) at least comprises a processing unit (21), a memory unit (22) having a trading module (25) built therein, a transmission unit (23), an electricity exchange unit (26), and a near-field sensing unit (27), wherein the processing unit (21) executes a built-in program and processes all sorts of data; the memory unit (22) is connected with the processing unit (21); the transmission unit (23) is connected with the processing unit (21) and is connectable with the trading management host (10), wherein the trading module (25) has a function of selecting a trading mode; the electricity exchange unit (26) is connected with the processing unit (21) and conducts electricity transfer with respect to the portable energy storage device (30); the electricity exchange unit (26) comprises an electricity management unit (261) and at least one electricity connection port (262) and at least one energy storage installation (263) connected with the electricity management unit (261), wherein the electricity management unit (261) manages and controls input or output of electricity through each electricity connection port (262) into or from each energy storage installation (263); the electricity exchange unit (26) is operable to do calculation and conversion between electricity and power dollar for transfer of power dollar with respect to the portable energy storage device (30) to generate a power dollar trading event.

5. The physical power dollar trading system according to claim 1, wherein the portable energy storage device (30) at least comprises a processing unit (31), a memory unit (32), a near-field sensing unit (33), and an electricity energy storage unit (35), wherein the processing unit (31) executes a built-in program and processes all sorts of data; the memory unit (32) is connected with the processing unit (31) and store programs, electricity amount, power dollar, and all sorts of data; the near-field sensing unit (33) is connected with the processing unit (31) and is operable for mutual sensing with respect to the trading point device (20) for transmission of trading data; the electricity energy storage unit (35) is connected with the processing unit (31), and the electricity energy storage unit (35) is operable to conduct electricity transfer with respect to the electricity exchange unit (26) of the trading point device (20); the electricity energy storage unit (35) comprises an electricity management unit (351) and an electricity connection port (352) and an energy storage unit (353) connected with the electricity management unit (351).

6. The physical power dollar trading system according to claim 5, wherein the portable energy storage device (30) further comprises a transmission unit (38) connected with the processing unit (31), and the transmission unit (38) is connectable with the trading management host (10) to enable connection for receiving and transmitting all sorts of trading data, so that the portable energy storage device (30) is operable for trading with another portable energy storage device (30).

7. A physical power dollar trading method, which is applicable to the system according to any one of claims 1-6, the method at least comprising:
(a) at least one entity member executing storage of energy in at least one portable energy storage device (30);
(b) executing transfer and recording of conversion between electricity and power dollar;
(c) executing a power dollar trading event;
(d) selecting a trading mode;
(e) executing transfer of electricity or power dollar; and
(f) transmitting power dollar trading data to the trading management host (10) for management.
